# EUROPEAN PATENT SPECIFICATION

(11) **EP 4 368 393 B1**
(45) Date of publication and mention of the grant of the patent: **22.07.2026**
(21) Application number: 24155445.0
(22) Date of filing: 27.06.2022
(51) Int. Cl.: B33Y 10/00, B29C 64/124, B29C 64/393, B33Y 50/02, B33Y 30/00, B33Y 50/00, G06T 19/20, B29C 64/20, B29C 64/386, G05B 19/4099

(54) **SLICE IMAGE PROCESSING METHOD FOR 3D PRINTING, SYSTEM, APPARATUS, AND STORAGE MEDIUM**
VERFAHREN, SYSTEM UND VORRICHTUNG ZUR VERARBEITUNG VON SCHNITTBILDERN FÜR 3D-DRUCK UND SPEICHERMEDIUM
PROCÉDÉ, SYSTÈME ET APPAREIL DE TRAITEMENT D'IMAGE DE TRANCHE POUR IMPRESSION 3D, ET SUPPORT D'INFORMATIONS

(30) Priority: 28.06.2021 CN 202110720685; 30.08.2021 CN 202111002866
(43) Date of publication of application: 15.05.2024
(62) Divisional of application: 22831986.9
(73) Proprietor: Guangzhou Heygears IMC. Inc, Guangzhou, Guangdong 510663 (CN)
(72) Inventor: WAN, Xin, Guangzhou, 510663 (CN); GUO, Yu, Guangzhou, 510663 (CN); DENG, Lingfeng, Guangzhou, 510663 (CN); ZHOU, Dachao, Guangzhou, 510663 (CN); GUO, Juntao, Guangzhou, 510663 (CN); XIAO, Hongquan, Guangzhou, 510663 (CN)
(74) Representative: Herzog IP Patentanwalts GmbH

(56) References cited:
- US-A1- 2005 142 024
- US-A1- 2017 326 786
- US-A1- 2019 337 219

## Description

### Cross-Reference to Related Application

The disclosure claims priority to Chinese Patent Application No. 202110720685.7 filed to the China National Intellectual Property Administration on June 28, 2021 and entitled "Curing Processing Method, System and Apparatus for 3D Printing, and Storage Medium", and claims priority to Chinese Patent Application No. 202111002866.2 filed to the China National Intellectual Property Administration on August 30, 2021 and entitled "3D Printing Method, System and Apparatus for 3D Printing, and Storage Medium".

### Technical Field

The disclosure relates to the technical field of 3D printing, and in particular, to a method and apparatus for processing a slice image for 3D printing, and a storage medium.

### Background

Photocuring 3D printing is the earliest 3D printing and molding technology. Face exposure type photocuring 3D printing is one of the branches of photocuring 3D printing. The technology uses the principle of curing a liquid photosensitive resin after irradiating the liquid photosensitive resin with a light projector. Software is used to slice a three-dimensional digital model of a printout, so as to obtain several slice images. Then the several slice images are successively projected by means of the light projector with a certain wavelength, so as to cause the photosensitive resin to be cured into cured sheets corresponding to the slice images, and the cured sheets are stacked layer by layer, so as to form a three-dimensional object.

In an actual operation, a user needs to trim the size of the printout due to various reasons (for example, to compensate for curing contraction of the photosensitive resin). Specifically, size adjustment is performed on the three-dimensional digital model of the printout or the slice images, and an adjustment mode may be to inward or outward offset an image contour of the model. However, such size adjustment mode can only meet the adjustment of a large size; and if a size adjustment parameter is less than a pixel size, an accurate size adjustment requirement cannot be met. In addition, size contraction occurs when a photosensitive resin material is cured. Generally, if the size of an exposure surface is larger, the contraction of the material is larger. In addition, problems such as printing residues may be caused by continuous exposure of a large-area solid exposure surface, thereby affecting printing accuracy and a printing effect.

US20190337219A1 discloses a photocuring-type three-dimensional printing method, which includes: obtaining a three-dimensional data model of a printing object; dividing the three-dimensional data model into a plurality of layers; identifying exposed areas and internal areas of at least a portion of layers of the three-dimensional data model; performing an exposure at each layer for the exposed areas of the at least a portion of layers, and performing an exposure process at an interval of multiple layers for the internal areas of the at least a portion of layers.

US20170326786A1 discloses an enhanced digital light processing-based mask projection stereolithography apparatus, which includes: a control platform capable of slicing a model of a to-be-prototyped object into layers, converting the layer into a bitmap, and further dividing the layer into a main body area and boundary filling areas; a digital light processing unit that is controlled by the control platform and capable of emitting a first light beam used for the corresponding main body area of the layer of the to-be-prototyped object; and a laser marking unit that is controlled by the control platform and capable of emitting a second light beam used for the corresponding boundary filling areas of the layer of the to-be-prototyped object.

### Summary

In view of this, the embodiments of the disclosure are intended to provide a method and apparatus for processing a slice image for 3D printing, and a storage medium.

The method of the invention is set out in the appended set of claims 1-10 and 13.

The apparatus of the invention is set out in the appended claim 11.

The storage medium of the invention is set out in the appended claim 12.

### Brief Description of the Drawings

Fig. 1 is a schematic structural diagram of a system for processing a slice image for 3D printing according to an embodiment.
Fig. 2 is a slicing flowchart of a three-dimensional model according to an embodiment.
Fig. 3 is a schematic diagram of a step process of a method for processing a slice image for 3D printing according to an embodiment.
Fig. 4 is a curve of the relationship between a grayscale compensation parameter and a print size deviation value according to an embodiment.
Fig. 5 is a schematic structural diagram of a slice image according to an embodiment of the disclosure.
Fig. 6 is a schematic diagram of a contraction direction of an inner contour and an outer contour according to an embodiment.
Fig. 7 is a diagram of a deviation trend of a design size and an actual size according to an embodiment.
Fig. 8 is a schematic structural diagram of a die hole contour filtered from a closed contour according to an embodiment.
Fig. 9 is a schematic structural diagram of a closed contour that is identified according to a constraint condition of a center set according to an embodiment.
Fig. 10 is a schematic diagram of a result of identifying the diameter of an assembly hole contour according to an embodiment.
Fig. 11 is a schematic diagram of a result of identifying a closed image block corresponding to the position of an assembly hole contour according to an embodiment.
Fig. 12 is a distribution diagram of format regions according to an embodiment.
Fig. 13 is a schematic structural diagram of a contour region and a filling region according to an embodiment.
Fig. 14 is a schematic structural diagram of a contour region and a filling region according to another embodiment.
Fig. 15 is a schematic structural diagram of adjacent sub-regions of adjacent second step slice images according to an embodiment.
Fig. 16 is a schematic diagram of a cross-sectional structure of a three-dimensional model having an exposed region according to an embodiment.
Fig. 17 is a structural block diagram of a system for processing a slice image for 3D printing according to an embodiment.
Fig. 18 is a schematic diagram of a step process of a method for processing a slice image for 3D printing according to another embodiment.
Fig. 19 is a structural block diagram of a system for processing a slice image for 3D printing according to another embodiment.
Fig. 20 is a structural block diagram of an apparatus for processing a slice image for 3D printing according to an embodiment.
Fig. 21 is another structural block diagram of a system for processing a slice image for 3D printing according to an embodiment.

### Detailed Description of the Embodiments

The disclosure is further described in detail below with reference to the accompanying drawings and specific embodiments. The numbering of steps in the following embodiments are only for the convenience of exposition and description, there is no limitation on the sequence among the steps, and an execution sequence of the steps in the embodiments may be adaptively adjusted according to the understanding of the person skilled in the art.

It should be understood that the use of the terms "a plurality of" and "several" are to be interpreted as meaning that there is at least one item, that is, there is one or more items.

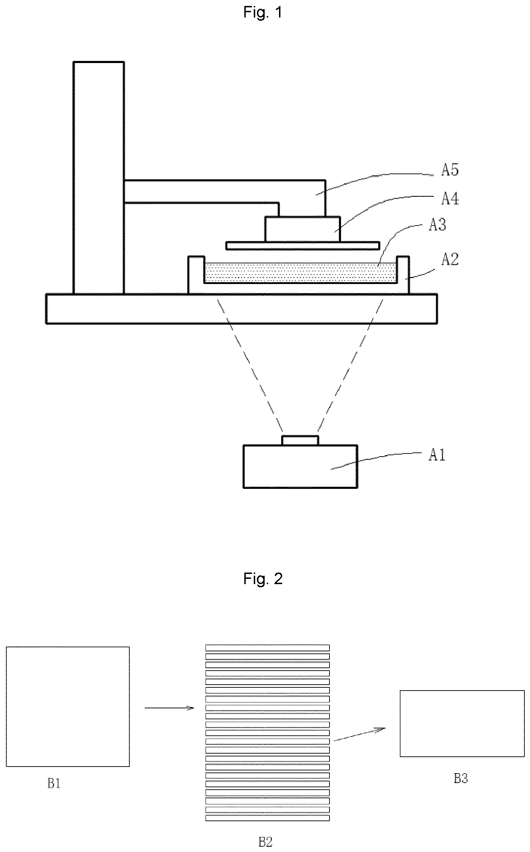

As shown in Fig. 1, a photocuring 3D printing system includes a light projector A1 and a 3D printer. The 3D printer includes a material tray A2, a photosensitive resin material A3, a molding platform A4, and an elevating mechanism A5. A supporting structure at the bottom of the material tray A2 is a transparent structure. A three-dimensional digital model to be printed is sliced to obtain several slice images; the light projector A1 successively projects the slice images, such that the photosensitive resin material A3 in the material tray A2 are successively cured, on the molding platform A4, into cured sheets corresponding to the slice images, and the cured sheets are stacked layer by layer, so as to form a three-dimensional digital model solid; and when the cured sheets are formed each time, the elevating mechanism correspondingly elevates a certain height.

As shown in Fig. 2, B1 is a top view of a three-dimensional digital model to be printed. The three-dimensional digital model is sliced to obtain a plurality of slice images B2; and the slice image of one of the plurality of slice images B2 is B3.

It is to be noted that, the method for processing the slice image for 3D printing of the embodiments of the disclosure is applied to photocuring three-dimensional printing. The photocuring three-dimensional printing includes Stereo Lithography Appearance (SLA), Digital Light Processing (DLP), Liquid Crystal on Silicon (LCOS), and Liquid Crystal Display (LCD) photocuring printing, and may also be face exposure type photocuring printing, such as DLP, LCOS, and LCD.

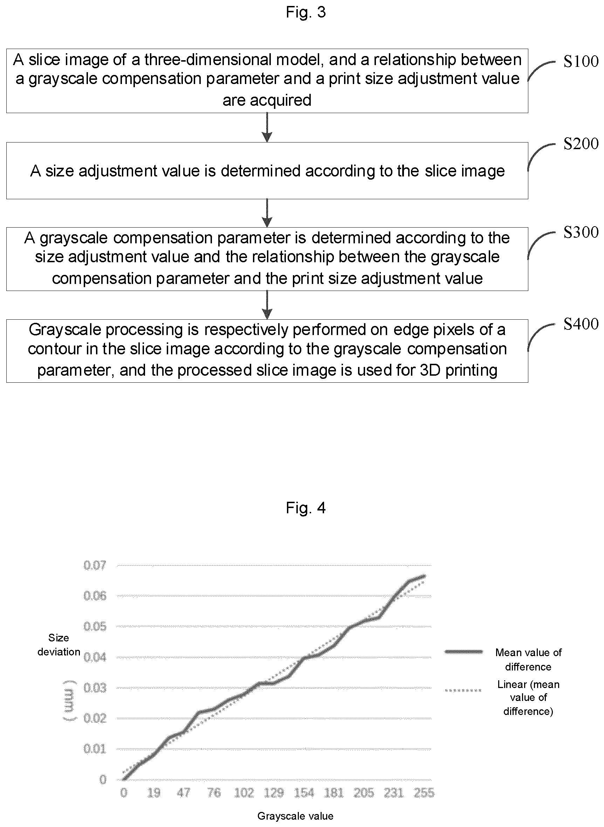

As shown in Fig. 3, an embodiment of the disclosure provides a method for processing a slice image for 3D printing. The method includes the following steps.

At S100, a slice image of a three-dimensional model, and a relationship between a grayscale compensation parameter and a size adjustment value are acquired.

For example, the three-dimensional model is a three-dimensional digital model of a printout. A plurality of slice images are obtained by slicing the three-dimensional digital model. The slice images are successively projected by means of a light source with a certain wavelength, so as to cause photosensitive resin to be cured into cured sheets corresponding to the slice images, and the cured sheets are stacked layer by layer, so as to form a three-dimensional solid which is the printout.

Due to various reasons (for example, curing contraction of the photosensitive resin) during printing, there is a size deviation between the size of the printout and the slice images of the three-dimensional model, such that the size of the printout needs to be trimmed. For example, the slice images of the three-dimensional model are processed, so as to compensate the size deviation between the printout and the slice images.

It is to be noted that, through extensive experiments, it has been proven that, after grayscale adjustment is performed on a model contour edge of a single slice image, a contour size of the model in the cured sheet is changed, and there is a positive correlation between a grayscale adjustment parameter and the size adjustment value. As shown in Fig. 4, a solid line in the figure represents a relationship curve of an actual measured grayscale value and a mean value of a difference of the size deviation, and a dotted line is a positive correlation curve of a fitted grayscale value and the size deviation. After corresponding grayscale processing is performed on an outermost pixel of the model contour edge, the contour size of the model (that is, a solid three-dimensional model) in the cured sheet is adjusted. The accuracy of size adjustment is controlled within a non-integer multiple pixel size range, for example, the size is adjusted to a corresponding size such as 0.1 pixels, 1.2 pixels, and 10.8 pixels. The adjustment of a non-integer multiple pixel size is to perform different grayscale superposition (for example, when a grayscale in the single pixel is 0-225) in pixels after the edge of a contour map is identified, so as to achieve the adjustment of the non-integer multiple pixel size. In an example with 1.6 pixels needing to be dilated, a 100% (255) grayscale is superposed to a first pixel on an outer edge on the basis of the contour map, and a 60 % (153) grayscale value is superposed to a second pixel. In another example with 1.6 pixels needing to be dilated, and a 100% (255) grayscale is superposed to the first pixel on the outer edge on the basis of the contour map, a 40% (102) grayscale value is superposed to the second pixel, and a 20% (51) grayscale value is superposed to a third pixel. It is to be noted that, in this embodiment, the number of pixels when grayscale superposition is performed in pixels is not limited, and the grayscale values of pixel superposition from outside to inside are decreased progressively on the basis of the contour map.

For example, the relationship between the grayscale compensation parameter and the size adjustment value is obtained from a relationship curve of the grayscale compensation parameter and the size adjustment value; and the relationship between the grayscale compensation parameter and the size adjustment value is a discrete point diagram correspondence relationship. For example, corresponding grayscale adjustment parameters are detected according to the several size adjustment values, such that the relationship between the grayscale compensation parameter and the size adjustment value are obtained.

It is to be noted that, the size adjustment value includes, but is not limited to, a specific numerical value of size enlargement or reduction, and a ratio of size enlargement or reduction. When the size adjustment value is the specific numerical value of size enlargement or reduction, the relationship between the grayscale compensation parameter and the size adjustment value is a curve graph shown in Fig. 4; and when the size adjustment value is the ratio of size enlargement or reduction, the relationship between the grayscale compensation parameter and the size adjustment value is a mapping table of the grayscale compensation parameter and the ratio of size enlargement or reduction, and is a curve graph. That is to say, in this embodiment, the form of the relationship between the grayscale compensation parameter and the size adjustment value is not limited.

It is understandable by a person skilled in the art that, the relationship curves corresponding to different pixel accuracies are slightly different. However, through a plurality of experiments, it has been proven that, the relationship curves corresponding to different pixel accuracies all represent a positive correlation. Acquiring the relationship curve of the grayscale compensation parameter and the size adjustment value is specifically acquiring a relationship curve corresponding to a pixel accuracy of the light projector.

At S200, a size adjustment value is determined according to the slice image.

After the relationship between the grayscale compensation parameter and the size adjustment value is obtained, the size adjustment value needs to be further determined, and the grayscale compensation parameters are further confirmed in sequence. In some embodiments of the present application, the size adjustment value is acquired by means of self-inputting by a user, and is set according to an actual requirement of the user. For example, in this embodiment, the size adjustment value is determined by identifying the slice image.

In an embodiment, the step of determining the size adjustment value according to the slice image includes: determining at least one size adjustment value according to the slice image.

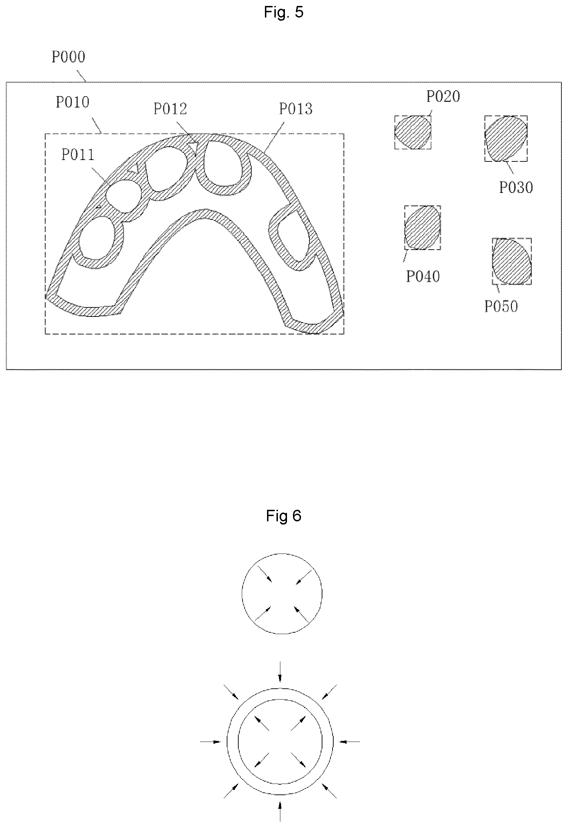

It is to be noted that, one slice image includes a plurality of slice shapes. For example, one slice image involves a plurality of three-dimensional models; and one slice shape includes a plurality of contours, for example, an outer contour and a plurality of inner contours. Each contour corresponds to different grayscale compensation parameters. Referring to Fig. 5, P000 represents one slice image; P010 represents the slice shape A; P020 represents the slice shape B; P030 represents the slice shape C; P040 represents the slice shape D; P050 represents the slice shape E; P011 represents the contour 1 in the slice shape A; P012 represents the contour 2 in the slice shape A; and P013 represents the contour 3 in the slice shape A. It is learned from Fig. 5 that, the slice image includes 5 slice shapes, and the slice shape A includes 3 contours.

In an embodiment, the step of determining at least one size adjustment value according to the slice image includes the following steps.

At S201, at least one slice shape in the slice image is identified.

At S202, contour identification is respectively performed on each slice shape, and the corresponding size adjustment value is determined according to an identified contour.

For example, referring to Fig. 5, first, when the slice shapes in the slice image are identified, the each slice shape is enveloped by a corresponding rectangular frame in a plurality of rectangular frames, a plurality of image blocks are segmented on the slice shapes according to the rectangular frames, and each image block corresponds to one slice shape; and then contour identification is performed on the each slice shape, and the corresponding size adjustment value is determined according to the identified contour.

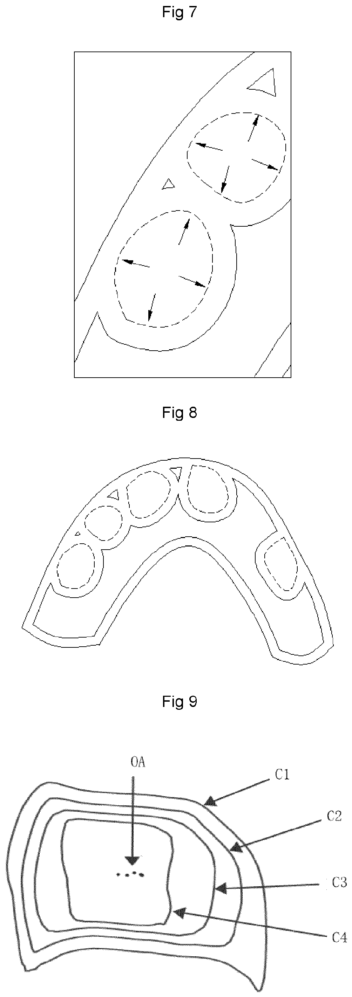

Due to curing contraction of photosensitive resin, as shown in Fig. 6, there is a deviation between a printed part size and a design size, and the arrow represents a contraction direction. As shown in Fig. 7, since the Z-axis cross-sectional width and aperture of a part are different, a final contraction size is also different. In a dental application case, the aperture of a printed segmented die (abutment tooth model) does not match the design size. When the design aperture of the part is small, an actual print aperture is too small, resulting in too tight fitting; and when the design aperture of the part is large, the actual print aperture is too large, resulting in too loose fitting and insufficient accuracy. The arrow represents a deviation direction. Therefore, appropriate trimming needs to be performed on the inner contour or the outer contour of the model, so as to compensate a size deviation during actual molding. For example, for an assembly hole, an assembly rod, an assembly column, an assembly pile, matching holes and columns, or irregular shapes is/are adjusted for size deviation by means of grayscale compensation and grayscale bias. Grayscale bias processing is to increase or reduce the grayscale of the edge contour.

Using the relationship between the grayscale adjustment parameter and the size adjustment value to solve the problem of size deviation caused by curing contraction of material has outstanding beneficial effect. The size adjustment value is determined according to the slice image. A specific determination mode is determined according to an actual application. This embodiment is not specifically limited thereto.

In an embodiment, the step of respectively performing contour identification on the each slice shape, and determining the corresponding size adjustment value according to the identified contour includes the following step.

At S210, the contour of the each slice shape is identified, and the size of the contour is calculated.

For example, the contour of the slice shape includes an inner contour or an outer contour. For example, the contour of the assembly hole is an inner contour, the contour of the assembly rod is an outer contour, the contour of the assembly column is an outer contour, and the contour of the assembly pile is an outer contour.

In an embodiment, the contour includes an inner contour and an outer contour. The step of identifying the contour of the each slice shape, and calculating the size of the contour includes: identifying the inner contour or the outer contour of the each slice shape, and calculating the size of the inner contour or the size of the outer contour.

As at least one alternative embodiment, in 3D printing, a solid image is an image that is configured to directly mold a printing product required by a user. For a non-solid image, according to an application scenario of the three-dimensional model, the non-solid image is an image that is configured to mold an auxiliary structure instead of an image that is directly configured to mold the printing product. The non-solid image includes a supporting structure image and a base plate structure image.

In an embodiment, the step of identifying the inner contour or the outer contour of the each slice shape includes the following steps.

At S211, a solid image in the each slice shape is identified according to a position attribute of the each slice shape.

At S212, an inner contour or an outer contour in the solid image is extracted.

In an embodiment, the step of filtering the assembly hole contour from the closed inner contour or filtering the assembly rod contour from the closed outer contour according to a contour geometry constraint condition includes the following step.

At S2121, the assembly hole contour is filtered from the closed inner contour or the assembly rod contour is filtered from the closed outer contour according to a constraint condition, wherein the constraint condition includes at least one of the following conditions: a constraint condition of a center set, a constraint condition of a contour area, a constraint condition of an ellipse area ratio, a constraint condition of a contour aspect ratio, and a constraint condition of conforming to a convex polygon.

As at least one alternative embodiment, all closed inner contours are searched in the slice image by means of extracting the contour tree. The contour geometry constraint condition includes, but is not limited to, a center set, a hole contour area, an ellipse area ratio, a contour aspect ratio, and conforming to a convex polygon. By means of the contour geometry constraint condition, all hole contours are filtered from the plurality of closed contours. Details are shown in Fig. 8, dotted portions are the assembly hole obtained through identification.

It is to be noted that, as shown in Fig. 9, the constraint condition for the center set means that whether central points of the plurality of overlapped (not in the same slice image) closed contours in an Z-axis direction (which is specifically a direction perpendicular to a slice layer) are all in the same closed contour, where C1 represents a first layer, C2 represents a second layer, C3 represents a third layer, C4 represents a fourth layer, and OA represents the central point of an ellipse of each layer. The constraint condition for the hole contour area means that there is a certain range of the size of a hole, and limitation is performed according to upper and lower area limits corresponding to the range. The constraint condition for the ellipse area ratio means that a contour line is fitted into an ellipse, and an internal area of the contour line is calculated at the same time; whether the constraint condition for the ellipse area ratio is met is determined according to the ratio of the internal area to an ellipse area, and if the ratio is less than a first preset value, it is considered that the constraint condition for the ellipse area ratio is met. The constraint condition for the contour aspect ratio means that there is a certain range for the aspect ratio of the hole; and when the aspect ratio exceeds the certain range, it is considered that the constraint condition for the contour aspect ratio is not met. The constraint condition of conforming to a convex polygon means that one of hole features is an essentially approximate irregular ellipse.

At S220, a size grade is determined according to the size, and the corresponding size adjustment value is determined according to the size grade.

In an embodiment, the step of determining the size grade according to the size, and determining the corresponding size adjustment value according to the size grade includes: determining the size grade according to the size of the inner contour, and determining the size adjustment value corresponding to the inner contour according to the size grade of the inner contour, or determining the size grade according to the size of the outer contour, and determining the size adjustment value corresponding to the outer contour according to the size grade of the outer contour.

As at least one alternative embodiment, on the basis of the size grade of the outer contour or the inner contour, the corresponding size adjustment value is matched, and grayscale processing is performed on the assembly hole contour according to the size adjustment method described above.

In an embodiment, the step of determining the size grade according to the size, and determining the corresponding size adjustment value according to the size grade includes the following steps.

At S221, the size grade is determined according to the size and a preset size grading condition.

At S222, the size is adjusted according to the size grade and a preset size grade adjustment plan, so as to determine the corresponding size adjustment value, wherein the size grade adjustment plan includes reducing a size, keeping the size unchanged, and increasing the size.

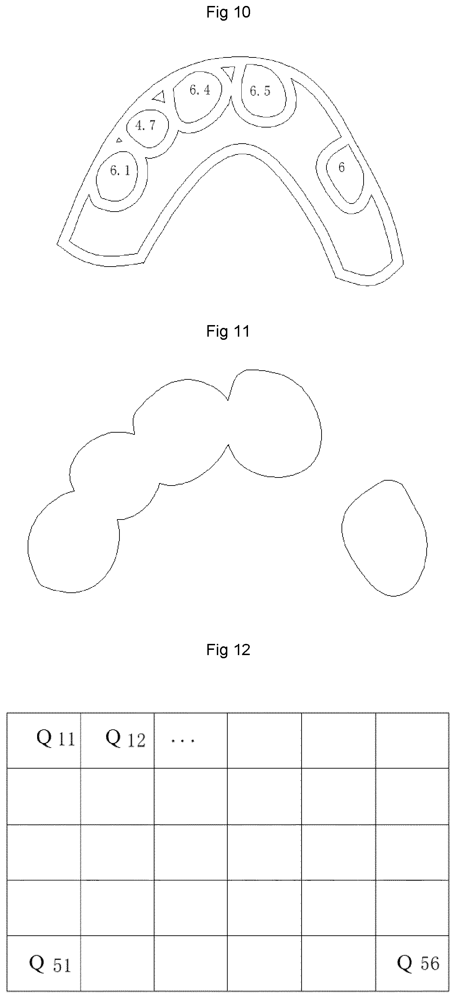

Referring to Fig. 10, the size of the assembly hole contour is specifically an average ellipse diameter of the assembly hole contour. According to a preset size grading condition, the corresponding grayscale compensation parameter is matched for the assembly hole contour within a preset size range, so as to match a corresponding grayscale compensation operation.

For example, when the average ellipse diameter of the contour is less than a, assembly is too tight, the size of the contour is decreased, and grayscales need to be reduced; when the average ellipse diameter of the contour is in a range [a, b], the assembly is appropriate, the size of the contour is unchanged, and the grayscales do not need to be adjusted; and when the average ellipse diameter of the contour is greater than b, the assembly is too loose, the size of the contour is increased, and the grayscales needs to be increased.

During grayscale processing, a thickness range involved in grayscale processing is a pixel on the edge of the assembly hole contour; and a mask image is generated according to the corresponding grayscale compensation parameter, so as to perform grayscale superposition on edge pixels of the assembly hole contour.

In an embodiment, the method for processing the slice image for 3D printing further includes the following steps.

At S213, after an assembly hole contour or an assembly rod contour of one slice image is identified, the assembly hole contour or the assembly rod contour is dilated, so as to obtain a closed image block corresponding to the assembly hole contour or a closed image block corresponding to the assembly rod contour.

At S214, an assembly hole contour of a slice image adjacent to the slice image is identified according to the closed image block corresponding to the assembly hole contour, or, an assembly rod contour of the slice image adjacent to the slice image is identified according to the closed image block corresponding to the assembly rod contour.

After the assembly hole of the slice image is identified, all assembly hole contours of the slice image are dilated, so as to obtain the closed image blocks corresponding to the positions of all the assembly holes of the slice image shown in Fig. 11. By using these closed image blocks, rapid positioning and rapid identification of the assembly hole contours are performed on other slice images that are arranged above or under the current slice image.

As at least one alternative embodiment, the assembly rod contour and the assembly hole contour have a different identification mode. Since the bottom of an assembly rod is added support structures, so as to be hung, the outer contour of the assembly rod does not appear at a first layer, such that contour identification needs to be performed on images at each layer, after the contour is identified, dilation processing is performed, and other layers are identified; and the assembly hole contour is found at the first layer, after the contour is identified, dilation processing is performed, and other layers are identified.

It is understandable by a person skilled in the art that, an assembly hole in a three-dimensional solid has a certain depth. After the three-dimensional model is sliced, the contour shapes of the assembly holes in the plurality of slice images are similar (for example, an overlapping effect or a covering effect is shown in a top view) and contour positions are similar. Therefore, using the closed image blocks as a constraint condition of identifying the assembly hole contour of the adjacent slice image is rational and convenient.

At S300, a grayscale compensation parameter is determined according to the size adjustment value and the relationship between the grayscale compensation parameter and the size adjustment value.

As at least one alternative embodiment, after the size adjustment value is determined, a first grayscale compensation parameter of the size adjustment value is correspondingly determined according to the relationship curve of the size adjustment value and the grayscale compensation parameter.

It is to be noted that, the size adjustment value is determined, and the grayscale compensation parameter is determined accordingly, so as to be used as a grayscale compensation parameter of all edge pixels of the contours in the slice image.

In an embodiment, the step of determining the grayscale compensation parameter according to the size adjustment value and the relationship between the grayscale compensation parameter and the size adjustment value includes: determining at least one grayscale compensation parameter according to the at least one size adjustment value and the relationship between the grayscale compensation parameter and the size adjustment value.

As at least one alternative embodiment, one size adjustment value is determined according to each contour **in** the slice image, and the grayscale compensation parameter is determined for each size adjustment value, so as to obtain at least one grayscale compensation parameter.

At S400, grayscale processing is respectively performed on edge pixels of a contour in the slice image according to the grayscale compensation parameter, and the processed slice image is used for 3D printing.

The edge pixels refer to pixels in the contour region in the slice image.

As at least one alternative embodiment, after grayscale processing is performed on the edge pixels of the slice image according to the determined first grayscale compensation parameter, 3D printing is performed on the slice image after grayscale processing, such that the print size of the slice image better meets an actual application requirement. Further, 3D printing is also performed on the processed slice image.

As at least one alternative embodiment, when the size adjustment value is determined, and one grayscale compensation parameter is determined accordingly, grayscale processing is performed on all the edge pixels of the contours in the slice image by means of the grayscale compensation parameter, so as to improve processing efficiency.

In an embodiment, the step of respectively performing grayscale processing on the edge pixels of the contours in the slice image according to the grayscale compensation parameter includes: respectively performing grayscale processing on the edge pixels of the corresponding contours in the slice image according to the at least one grayscale compensation parameter, where the processed slice image is used for 3D printing.

As at least one alternative embodiment, one size adjustment value is determined according to each contour in the slice image, and the grayscale compensation parameter is determined for each size adjustment value, so as to obtain at least one grayscale compensation parameter; and grayscale processing is performed on the edge pixels of the corresponding contour by using each grayscale compensation parameter, so as to improve processing accuracy.

The embodiments of the disclosure include the following beneficial effects. According to the embodiments of the disclosure, the size adjustment value is first determined according to the slice image, and the grayscale compensation parameter is then determined according to the size adjustment value and the determined relationship between the grayscale compensation parameter and the size adjustment value; and then grayscale processing and 3D printing are performed on the edge pixels of the contour in the slice image according to the grayscale compensation parameter. That is to say, an accurate size adjustment requirement is met by compensating the edge pixels of the slice image.

The above size adjustment mode is only on the basis of the modification of front-end data, and does not take into account the influence of a back-end printing device, and the pixel accuracy and printing format of different printing devices are different, resulting in a certain influence on size adjustment.

In an embodiment, the method for processing the slice image for 3D printing further includes the following step.

At S001, the corresponding size adjustment value is determined according to one or more of a shape parameter, a region parameter, a material parameter, a temperature parameter, or an application type of the each slice shape.

It is to be noted that, depending on the shape parameter is to realize the purpose of adaptively matching size adjustment parameters according to the complexity of the contour shape. Depending on the region parameter is because there is at least one functional region and/or a non-functional region on a printout, and some functional regions does not need to store size compensation. For example, the slice shape includes an outer contour and a plurality of inner contours, but partial small inner contours of the outer contour are in the non-functional region, and grayscale compensation does not need to be performed, such that there is no further follow-up operations such as size grading. For the material parameter, different material have different curing characteristics, and the degree of curing contraction of the material is also different, such that the grayscale adjustment parameter and the size adjustment value are also different. The application type is an application scenario of the printout. The application scenario corresponds to the material parameter. Some material are developed for a specific application scenario.

As at least one alternative embodiment, during photocuring printing, there is a problem of overall size contraction of a material during conversion from a liquid state to a solid state. A zoom factor in an XY direction is added to slice data for size compensation at a previous processing step. Different material correspond to different zoom factors. For example, 0.003 size contraction exists in the XY direction of a certain material, and the zoom factor in the XY direction is adjusted to 1.003 correspondingly at the previous processing step, so as to compensate size contraction. The factor adjustment is effective to the entire model, which is to zoom in and out of the entire slice image, primarily to compensate for the overall contraction of the material. **In** combination with the accurate adjustment effect generated by the first grayscale compensation parameter on an image size, the adjustment of the size of the printout is more convenient.

In an embodiment, the method for processing the slice image for 3D printing further includes the following step.

At S002, the offset of a projection point is converted into the offset of a pixel point, and reverse distortion processing is performed according to the offset of the pixel point and the slice image.

As at least one alternative embodiment, due to a device installation error or the influence of lens optical distortion, an actual projection image corresponding to the slice image is deformed, such that a light projecting device for projection needs to be calibrated. The offset of each pixel point is converted by means of the offset of the projection point, and specific steps are as follows.

At step one, the light projecting device projects an initial projection drawing corresponding to the slice image to a projection platform, a calibration board is placed on the projection platform, and the projection platform is photographed. The shape of the projection drawing is the same as the shape on the calibration board; the shape is a dot matrix; and points are rectangular or circular.

At step two, calibration point coordinates and actual projection point coordinates are identified according to a photographed image, so as to obtain a calibration point matrix and an actual projection point matrix.

At step three, a rotation translation operation is performed on the calibration point matrix and/or the actual projection point matrix, a calibration point and an actual projection point are converted into the same image coordinate system, and then a spacing value T0 of the calibration point and the actual projection point in the image coordinate system is calculated.

As at least one alternative embodiment, the same image coordinate system is a coordinate system where the calibration point coordinates are located, or is a coordinate system where the actual projection point coordinates are located, or is an image coordinate system other than the coordinate system where the calibration point coordinates are located and the coordinate system where the actual projection point coordinates are located.

At step four, the T₀ in the image coordinate system is converted into an offset C₁ in a pixel coordinate system, and reverse distortion processing is performed on the initial projection drawing according to the offset C₁, where both the T₀ and the C₁ are matrices formed by vectors.

Before the slice image is projected (that is, 3D printing being performed on the slice image), the C₁ is first acquired by means of the calibration method; and reverse distortion processing is then performed on the projection drawing according to the C₁. That is, the slice image is calibrated to avoid the influence on the size of the printout due to the device installation error or the lens optical distortion, such that the adjustment of the size of the printout is more accurate.

In an embodiment, the method for processing the slice image for 3D printing further includes the following steps.

At S0031, a light projector is controlled to project light on a format, and measure format light intensities of several different regions on the format; and a division region is shown in Fig. 12, and the format is divided into several regions with an equal area.

At S0032, the minimum format light intensity in the several different regions is used as a reference, and a second grayscale compensation coefficient corresponding to other regions of the format is calculated according to the reference, so as to generate a digital mask.

At S0033, mask compensation is performed, by using the digital mask, on a projection drawing that is projected by the light projector.

As at least one alternative embodiment, in the same format, there are deviations in the projection energy of the light projector to various regions of the format, which has an impact on printing accuracy, and has further impact on the accurate adjustment of the print size, such that uniformity calibration needs to be performed on the energy of the format. By projecting light on the format, light intensities (which are detected by using a photometer) of a plurality of different regions on the format is measured; and the minimum light intensity value is then selected from the plurality of regions as the reference, and the second grayscale compensation coefficient corresponding to other regions is calculated according to the reference light intensity value. The product of the second grayscale compensation coefficient and a grayscale value of the projection image is equivalent to a grayscale value of the projection image under the reference light intensity. The digital mask is generated according to the second grayscale compensation coefficient and position information corresponding to the second grayscale compensation coefficient. Mask compensation is performed, by using the digital mask, on the projection image that is projected by the light projector, so as to obtain a printed image of which exposure surface has uniform light intensity.

In an embodiment, the method for processing the slice image for 3D printing further includes the following steps.

At S0041, a current-optical power curve is determined according to the format light intensities corresponding to different currents of the light projector.

At S0042, the format light intensity is adjusted according to the current-optical power curve.

As at least one alternative embodiment, on the basis of optical uniformity calibration, light intensity calibration is used to calibrate format energy and the corresponding current. The light intensity of the projection format is detected by inputting different current to the light projector. The ratio of optical power to area is the light intensity, such that the current-optical power curve is obtained as a debugging reference of the optical power. Therefore, when the format light intensity is adjusted, a specific current input value corresponding to the light intensity is clearly known, such that the control of the format light intensity is more accurate by inputting the current input value to the light projector. The format light intensity refers to the light intensity on the projection format. It is to be noted that, in the method the optical power of the projection format is also acquired by inputting different currents to the light projector, so as to obtain the current-optical power curve as the debugging reference of the optical power. When the format light intensity is adjusted, the specific current input value corresponding to the light intensity is clearly known according to the current-optical power curve.

According to the invention, the method for processing the slice image for 3D printing further includes the following step.

At S004, each slice image is separated to obtain a contour region, and a filling region that is defined in the contour region, and the filling region is segmented into several sub-regions, where there is a gap between the adjacent sub-regions in the same slice image, and the adjacent sub-regions of the adjacent slice images are partially overlapped in a perpendicular direction.

In an embodiment, before the each slice image is separated to obtain the contour region, and the filling region that is defined in the contour region, the method for processing the slice image for 3D printing further includes: slicing the three-dimensional model to generate a series of slice images; and selecting at least two consecutive slice images from the series of slice images.

In an embodiment, the step of separating the slice images to obtain the contour region, and the filling region that is defined in the contour region, and segmenting the filling region into the several sub-regions includes the following operation.

Each of the selected slice images is separated to obtain the contour region, and the filling region that is defined in the contour region, and the filling region is segmented into the several sub-regions.

For ease of expression, in the following, the initial series of slice images are expressed as the first step slice images, and the segmented slice images are expressed as the second step slice images.

At S005, the contour region and either of the sub-regions and the gaps are used as exposure regions for exposing and curing in 3D printing. It is to be noted that, the processed series of slice images includes the slice images that are subjected to contour region and filling region segmentation, and the slice image that are not subjected to contour region and filling region segmentation.

It is to be noted that, for a molding platform of a printer, since there is a plurality of printouts on the molding platform, when a light source is exposed each time, an exposure image is formed by the slice images corresponding to the plurality of printouts. That is, the exposure image is formed by combining a plurality of contour regions and filling regions. Although the solution is described with respect to a single printout, it does not prevent the solution from being used in situations where the plurality of printouts are printed on the same version.

It is understandable by a person skilled in the art that, either the sub-regions or the gaps is used as the exposure region.

In addition, even for a single printout, the slice images differ from each other. Since the shape of the printout is irregular, the numbers of light spots between slice layers that are not adjacent to each other are different. In other words, between the slice layers that are not adjacent to each other, the numbers of combinations of the contour region and the filling region are different. However, it would have been readily understood by a person skilled in the art that, this does not affect an implementation effect of the solution in this case.

Finally, it would have been readily understood by a person skilled in the art that, for a single combination of the contour region and the filling region, although there is a correspondence relationship between the contour region and the filling region, the number of the contour regions is different from the number of the filling regions, because the printout has an outer contour and an inner contour.

As at least one alternative embodiment, before photocuring 3D printing is performed, a three-dimensional data model of a printout to be printed and molded needs to be acquired first. The step may be acquired by means of scanning or modeling, and is not described herein again. Then, the three-dimensional data model is sliced to obtain a plurality of first slice images for exposure molding. However, if the first slice images are directly used, large material contraction and printing residues occur. Therefore, the solution provides a method for pre-processing the slice images, such that when the processed slice images are used for exposure molding, the technical problems are improved or solved to a certain extent.

Due to the curing characteristic of a photosensitive resin material, if a curing size is larger, contraction is larger. A contour portion of the slice image is separated, an exposure region of the contour becomes thinner and finer and contracts towards a nearby and dense region, and the contraction is reduced. A high-accuracy region finally required by a photocuring 3D printing model is the contour portion; and the value of the filling region is to increase a connection area between layers, so as to improve the firmness of a model structure. There is no hard requirement for accuracy and shapes.

The filling region is divided into several sub-regions, and there is a gap between the adjacent sub-regions. During exposing and curing, one of the sub-regions and the gaps is exposed, and the other is not exposed, so as to form a non-exposure region. The present of the non-exposure region promotes resin flow of photosensitive resin during a layer-by-layer curing process, facilitating spreading of heat generated by the resin in all directions. In addition, the exposure region is separated into several small-area sub-regions, such that a large-area exposure curing region is prevented from continuously releasing heat to cause local overheating of the resin while the contraction is reduced, thereby improving the problem of printing residues.

Meanwhile, the sub-regions of different second step slice images in a perpendicular direction are partially overlapped in space, and partial overlapping is configured to keep the structural strength.

As at least one alternative embodiment, by means of a software algorithm such as an erosion algorithm, the two-dimensional first slice image is segmented into the contour region and the filling region. The thickness and size of the contour is freely controlled according to software algorithm parameters.

The embodiments of the disclosure include the following beneficial effects. According to the embodiments of the disclosure, at least two consecutive slice images are separated to obtain the contour region, and the filling region that is defined in the contour region, and the filling region is segmented into several sub-regions, and there is a gap between the adjacent sub-regions in the same slice image, such that the problem of material contraction and printing residues of photocuring 3D printing is solved. Since the adjacent sub-regions of the adjacent slice images are partially overlapped in the perpendicular direction, the firmness of the model structure is improved.

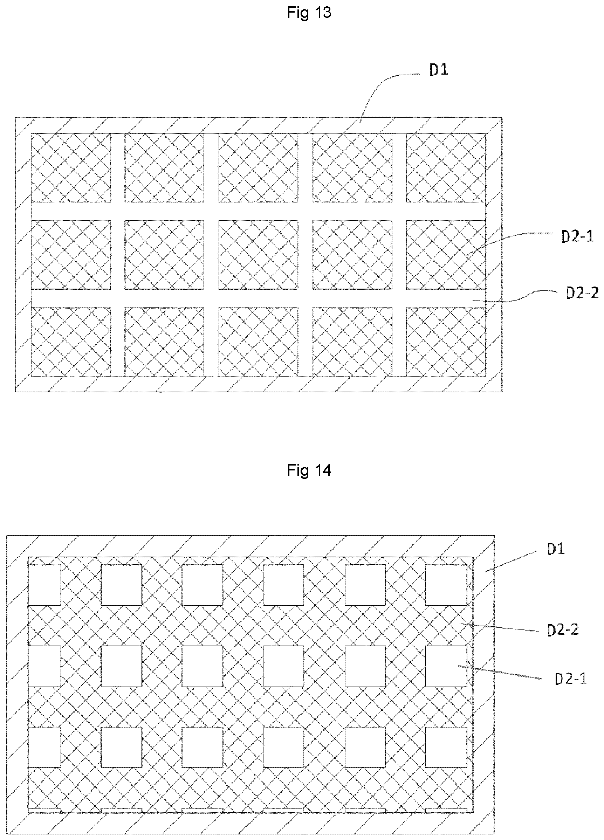

In a specific embodiment, as shown in Fig. 13, D1 is the contour region, D2-1 is the sub-region, and D2-2 is the gap; the sub-region D2-1 and the gap D2-2 jointly form the filling region; the sub-region D2-1 and the contour region D1 are used as the exposure regions; and the gap D2-2 is used as the non-exposure region.

As at least one alternative embodiment, as shown in Fig. 14, D1 is the contour region, D2-1 is the sub-region, and D2-2 is the gap; the sub-region D2-1 and the gap D2-2 jointly form the filling region; the gap D2-2 and the contour region D1 are used as the exposure regions; and the sub-region D2-1 is used as the non-exposure region. In a specific example, the gap D2-2 is a gap of a net structure, when the gap D2-2 is exposed, interlaced lines that form a net are exposed.

In an embodiment, the step of segmenting the filling region into the plurality of sub-regions includes: segmenting the filling region into several sub-regions that are in closed shapes.

In an embodiment, the step of segmenting the filling region into the plurality of sub-regions includes: segmenting the filling region into the several sub-regions that have an equal area and are in closed shapes.

As at least one alternative embodiment, the closed shape includes a rectangular shape, a square shape, a triangular shape, or a circular shape. In this embodiment of the present application, the square shape is selected. As shown in Fig. 13, the square sub-regions are distributed in the filling region in the form of matrix arrangement.

It is to be noted that, due to the presence of the gaps, the sub-regions are not connected to each other, and there is a gap even between the sub-region and the contour region. In addition, it is understandable that, the filling region is defined in the contour region, such that the filling region is bounded, and the shape of the sub-region close to a boundary is in an incomplete square shape. In other words, for example, the closed shapes of the sub-regions are the square shapes, the sub-regions include complete square sub-regions that are densely distributed in the filling region and incomplete square sub-regions that are distributed close to the boundary of the filling region.

According to the invention, , the adjacent sub-regions of the adjacent slice images are partially overlapped in the perpendicular direction by means of the following step.

The sub-regions of the adjacent slice images at the same position in the perpendicular direction are offset by a preset distance along a preset direction.

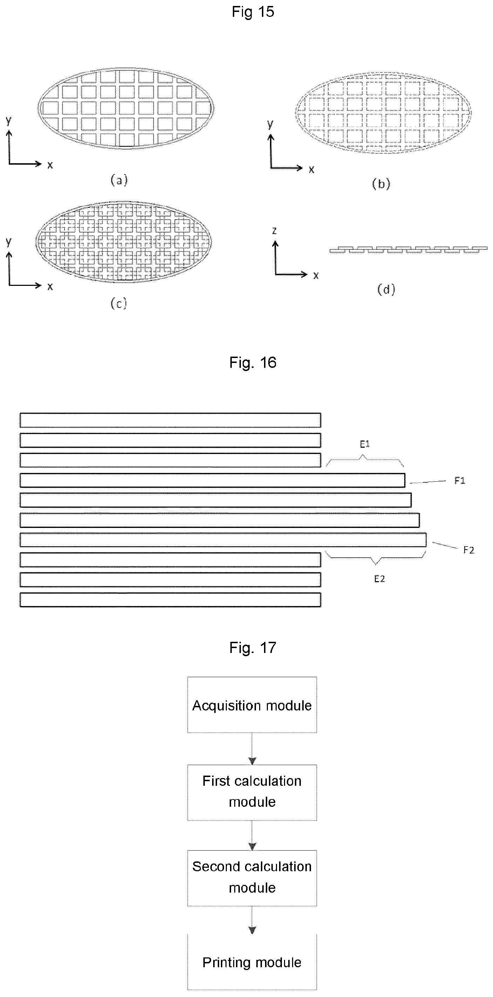

As at least one alternative embodiment, as shown in Fig. 15, Fig. 15a is a top view of an ith layer slice image on an x-y plane, where i is an integer; and Fig. 15b is a top view of an (i+1)th layer slice image on the x-y plane. Compared with the positions of square sub-regions in the ith layer slice image, the positions of square sub-regions in the (i+1)th layer slice image "offset". It is to be noted that, the contour region is the boundary of the sub-regions (filling region), and does not offset with the sub-regions. As at least one alternative embodiment, for the slice images of two layers, a mesh array (that is, the square sub-regions in matrix arrangement) in the contour region shows an offset effect. As at least one alternative embodiment, referring to Fig. 15c and Fig. 15d, Fig. 15c is a top view of ith and (i+1)th layer slice images overlapping on the x-y plane; and Fig. 15d is a cross-sectional view of the ith and (i+1)th layer slice images on the x-y plane. In the adjacent two-layer slice images, the adjacent square sub-regions in the perpendicular direction are overlapped with each other. That is, the sub-regions of the ith layer is overlapped with the sub-regions of the (i+1)th layer adjacent to the ith layer in the perpendicular direction. It is seen from Fig. 15 that, dislocation overlapping across layers occurs among the squares, and the square of the next layer covers the gap of the square of the previous layer.

In an optional embodiment, a position offset is set to a cyclic mode. For example, after a four-layer cyclic offset, the square returns to its original position. The position offset is realized by means of various forms of offset cyclic lists, and the present application is not specifically limited thereto. In one of the embodiments, as a print layer thickness increases, the number of times of a cycle required for the square to return to its original position is decreased.

In an embodiment, the method for processing the slice image for 3D printing further includes the following operation.

Model outer surface identification is performed on a series of two-dimensional second step slice images.

That is to say, if the current second step slice image has an exposed filling region compared to the first several or last several slice images of the current second step slice image, the exposed filling region is determined as a model outer surface region, and sub-region segmentation is not performed on the model outer surface region.

As at least one alternative embodiment, algorithm verification is performed on each two-dimensional exposure full image; a model outer surface is indirectly identified; if the current slice image has an excess portion compared to the first m slice images or the last m slice images, the excess portion is not subjected to an operation of "segmenting the filling region into several sub-regions". In this way, meshes are prevented from appearing on a model surface to affect a surface printing effect.

By using the nth slice exposure full image as an example, a comparison operation is performed on the first m and the last m exposure full images, so as to find an excess exposure portion of the nth image compared to the first and last m images; and when mesh processing is performed on a filling portion of the nth exposure image, the excess exposure portion is ignored, so as to ensure that the exposure portion is not subjected to mesh division processing when being used as an outer surface, thereby indirectly achieving an outer surface identification result.

As at least one alternative embodiment, as shown in Fig. 16, an F1 layer of the nth layer has an exposed region E1 compared to the first 3 layers, and the exposed region E1 is not subjected to the operation of "segmenting the filling region into several sub-regions". Likewise, an F2 layer of the n'th layer has an exposed region E2 compared to the last 3 layers, and the exposed region E2 is not subjected to the operation of "segmenting the filling region into several sub-regions".

It is to be noted that, when the sub-regions and the gaps are divided sufficiently small, even if outer surface identification is not performed, surface meshes of a printed model are invisible.

In an embodiment, the method for processing the slice image for 3D printing further includes the following operation.

A curing depth of the contour region is set to be greater than or equal to a curing depth of the filling region.

In this implementation, increasing the curing depth of the contour region improves the mechanical properties of parts to a certain extent.

As at least one alternative embodiment, for a photocuring printing method of face exposure, on the one hand, the contour region and the filling region are separately cured, but the exposure energy of the contour region are different from that of the filling region, which is realized by differentiating the grayscale, exposure intensity, or exposure duration of the contour region and the filling region; and on the other hand, the contour region and the filling region are cured at the same time, but the exposure intensity and/or exposure time of the contour region is/are greater than that of the filling region.

For a point light source type photocuring used in the method for processing the slice image for 3D printing, for example, Stereo lithography Apparatus (SLA) photocuring printing, the speed of laser scanning or spot sizes is controlled.

Alternatively, the contour region and the filling region are cured by using different light sources; the types of the light sources are the same or different; and when the light sources are different, the contour region corresponds to a point light source-laser light source, and the filling region corresponds to a face light source. In this embodiment of the disclosure, the described face light source includes, but is not limited to, a Digital Light Processing (DLP) light source, a Liquid Cristal Display (LCD) light source, or a Liquid Crystal on Silicon (LCOS) light source, and the like. As shown in Fig. 17, an embodiment of the disclosure provides a system for processing a slice image for 3D printing. The system includes an acquisition module, a first calculation module, a second calculation module, and a printing module.

The acquisition module is configured to acquire a slice image of a three-dimensional model, and a relationship between a grayscale compensation parameter and a size adjustment value.

The first calculation module is configured to determine a size adjustment value according to the slice image.

The second calculation module is configured to determine a grayscale compensation parameter according to the size adjustment value and the relationship between the grayscale compensation parameter and the size adjustment value.

The printing module is configured to respectively perform grayscale processing on edge pixels of a contour in the slice image according to the grayscale compensation parameter, where the processed slice image is used for 3D printing.

It may be seen that, the content in the above method embodiments is applicable to the present system embodiments. The functions specifically realized by the present system embodiments are the same as those of the above method embodiments. The beneficial effects achieved are the same as the beneficial effects achieved by the above method embodiments.

An embodiment of the disclosure provides a 3D printing method.

The method includes the method for processing the slice image for 3D printing in any one of the above embodiments.

The method further includes: performing 3D printing on a processed slice image.

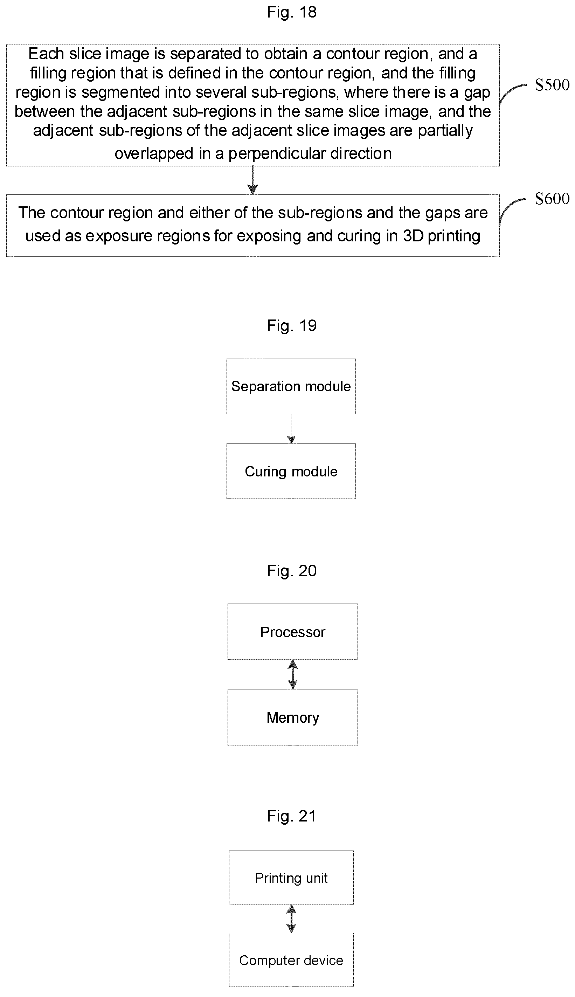

As shown in Fig. 18, an embodiment of the disclosure provides a method for processing a slice image for 3D printing. The method includes the following steps, which are shown as follows.

At S500, each slice image is separated to obtain a contour region, and a filling region that is defined in the contour region, and the filling region is segmented into several sub-regions, where there is a gap between the adjacent sub-regions in the same slice image, and the adjacent sub-regions of the adjacent slice images are partially overlapped in a perpendicular direction.

In an optional embodiment, before the each slice image is separated to obtain the contour region, and the filling region that is defined in the contour region, the method for processing the slice image for 3D printing further includes: slicing the three-dimensional model to generate a series of slice images; and selecting at least two consecutive slice images from the series of slice images.

In an optional embodiment, the step of separating the slice images to obtain the contour region, and the filling region that is defined in the contour region, and segmenting the filling region into the several sub-regions includes the following operation.

Each of the selected slice images is separated to obtain the contour region, and the filling region that is defined in the contour region, and the filling region is segmented into the several sub-regions.

For ease of expression, in the following, the initial series of slice images is expressed as the first step slice images, and the segmented slice images are expressed as the second step slice images.

At S600, the contour region and either of the sub-regions and the gaps are used as exposure regions for exposing and curing in 3D printing. It is to be noted that, the processed series of slice images includes the slice images that are subjected to contour region and filling region segmentation, and the slice image that are not subjected to contour region and filling region segmentation.

In an embodiment, before the each slice image is separated to obtain the contour region, and the filling region that is defined in the contour region, the method for processing the slice image for 3D printing further includes: slicing the three-dimensional model to generate a series of slice images; and selecting at least two consecutive slice images from the series of slice images.

In an embodiment, the step of separating the slice images to obtain the contour region, and the filling region that is defined in the contour region, and segmenting the filling region into the several sub-regions includes the following operation.

Each of the selected slice images is separated to obtain the contour region, and the filling region that is defined in the contour region, and the filling region is segmented into the several sub-regions.

In an embodiment, the step of segmenting the filling region into the plurality of sub-regions includes: segmenting the filling region into several sub-regions that are in closed shapes.

In an embodiment, the step of segmenting the filling region into the plurality of sub-regions includes: segmenting the filling region into the several sub-regions that have an equal area and are in closed shapes.

In an embodiment, the adjacent sub-regions of the adjacent slice images are partially overlapped in the perpendicular direction by means of the following step.

The sub-regions of the adjacent slice images at the same position in the perpendicular direction are offset by a preset distance along a preset direction.

In an embodiment, the method for processing the slice image for 3D printing further includes the following operation.

If the current slice image has an exposed filling region compared to the first several or last several slice images of the current slice image, the exposed filling region is determined as a model outer surface region, and sub-region segmentation is not performed on the model outer surface region.

In an embodiment, the method for processing the slice image for 3D printing further includes the following operation.

A curing depth of the contour region is set to be greater than or equal to a curing depth of the filling region.

As shown in Fig. 19, an embodiment of the disclosure provides another system for processing a slice image for 3D printing. The system includes a separation module and a curing module.

The separation module is configured to separate each slice image to obtain a contour region, and a filling region that is defined in the contour region, and segment the filling region into several sub-regions, where there is a gap between the adjacent sub-regions in the same slice image, and the adjacent sub-regions of the adjacent slice images are partially overlapped in a perpendicular direction.

The curing module is configured to use the contour region and either of the sub-regions and the gaps as exposure regions for exposing and curing in 3D printing.

As shown in Fig. 20, an embodiment of the disclosure provides an apparatus for processing a slice image for 3D printing. The apparatus includes at least one processor and at least one memory.

The at least one memory is configured to store at least one program.

When the at least one program is executed by the at least one processor, the at least one processor is enabled to implement the method for processing the slice image for 3D printing.

It may be seen that, the content in the above method embodiments is applicable to the present apparatus embodiments. The functions specifically realized by the present apparatus embodiments are the same as those of the above method embodiments. The beneficial effects achieved are the same as the beneficial effects achieved by the above method embodiments.

In addition, an embodiment of the present application further discloses a computer program product or a computer program. The computer program product or the computer program is stored in a computer-readable storage medium. The processor of a computer device may read the computer program from the computer-readable storage medium. The processor executes the computer program, such that the computer device is enabled to execute the above 3D printing method. Similarly, the content in the above method embodiments is applicable to the present storage medium embodiments. The functions specifically realized by the present storage medium embodiments are the same as those of the above method embodiments. The beneficial effects achieved are the same as the beneficial effects achieved by the above method embodiments.

As shown in Fig. 21, an embodiment of the disclosure provides a system for processing a slice image for 3D printing. The system includes a printing unit and a computer device connected to the printing unit.

The printing unit is configured to print a three-dimensional model according to an instruction.

The computer device includes at least one processor and at least one memory.

The at least one memory is configured to store at least one program.

When the at least one program is executed by the at least one processor, the at least one processor is enabled to implement the method for processing the slice image for 3D printing.

As at least one alternative embodiment, the computer device may be electronic devices of different types, and includes, but is not limited to, terminals such as a desktop computer and a laptop computer. It may be seen that, the content in the above method embodiments are applicable to the present system embodiments. The functions specifically realized by the present system embodiments are the same as those of the above method embodiments. The beneficial effects achieved are the same as the beneficial effects achieved by the above method embodiments.

The preferred embodiments of the disclosure are described in detail above, while the scope of the invention is defined by the claims of this application.

### Industrial Applicability

The solutions provided in the embodiments of the disclosure may be applied to the technical field of 3D printing. In the embodiments of the disclosure, the slice image of the three-dimensional model, and the relationship between the grayscale compensation parameter and the size adjustment value are acquired; the size adjustment value is determined according to the slice image; the grayscale compensation parameter is determined according to the size adjustment value and the relationship between the grayscale compensation parameter and the size adjustment value; and grayscale processing is respectively performed on edge pixels of contours in the slice image according to the grayscale compensation parameter, and the processed slice image is used for 3D printing. By means of the embodiments of the disclosure, an accurate size adjustment requirement may be met by compensating the edge pixels of the slice image, such that the disclosure may be widely applied to the technical field of 3D printing

## Claims

1. A method for processing a slice image for 3D printing comprising:
separating each slice image to obtain a contour region, and a filling region that is defined in the contour region, and segmenting the filling region into several sub-regions, wherein there is a gap between adjacent sub-regions in the same slice image, and the adjacent sub-regions of adjacent slice images are partially overlapped in a perpendicular direction by offsetting, by a preset distance, the sub-regions of the adjacent slice images at the same position in the perpendicular direction are along a preset direction; and
using the contour region along with either the sub-regions or the gaps as exposure regions for exposing and curing in 3D printing, and using the other of the sub-regions or the gaps as non-exposure regions.

2. The method for processing the slice image for 3D printing as claimed in claim 1, wherein segmenting the filling regions into the several sub-regions comprises: segmenting the filling regions into the several sub-regions that are in closed shapes.

3. The method for processing the slice image for 3D printing as claimed in claim 2, wherein the several sub-regions obtained by segmenting the filling regions comprise: complete square sub-regions that are distributed in the filling regions and incomplete square sub-regions that are distributed close to a boundary of the filling regions.

4. The method for processing the slice image for 3D printing as claimed in claim 2, wherein the contour region is a boundary of the sub-regions, and is free from an offset along with the sub-regions.

5. The method for processing the slice image for 3D printing as claimed in claim 2, wherein segmenting the filling regions into the several sub-regions comprises: segmenting the filling regions into the several sub-regions that have an equal area and are in closed shapes.

6. The method for processing the slice image for 3D printing as claimed in claim 5, wherein a position offset is set to a cyclic mode, wherein the cyclic mode refers to that as a print layer thickness increases, the number of times of a cycle required for a square to return to an original position is decreased.

7. The method for processing the slice image for 3D printing as claimed in claim 1, further comprising:
determining a portion of the filling region of the slice image, which represents an excess portion compared to several adjacent slice images, as a model outer surface region, wherein the model outer surface region is not subjected to segmentation into the sub-regions.

8. The method for processing the slice image for 3D printing as claimed in claim 1, further comprising:
setting a curing depth of the contour region to be greater than or equal to a curing depth of the filling region.

9. The method for processing the slice image for 3D printing as claimed in claim 1, when exposing the filling region and the contour region at the same time, an exposure intensity and/or exposure time of the contour region is greater than that of the filling region.

10. The method for processing the slice image for 3D printing as claimed in claim 9, wherein the filling region and the contour region are cured by using different light sources;
wherein the different light sources comprises a point light source corresponding to the contour region and a face light source corresponding to the filling region.

11. An apparatus for processing a slice image for 3D printing, comprising:
at least one processor, and
at least one memory, configured to store at least one program, wherein
when the at least one program is executed by the at least one processor, the at least one processor is enabled to implement the method for processing the slice image for 3D printing according to any one of claims 1 to 10.

12. A storage medium, storing a program that is executable by a processor, wherein, when being executed by the processor, the program executable by the processor is configured to execute the method for processing the slice image for 3D printing according to any one of claims 1 to 10.

13. A method for processing a slice image for 3D printing, comprising:
slicing a three-dimensional model to generate a series of slice images;
selecting at least two consecutive slice images from the series of slice images; and
processing each of the selected slice images according to the method of any one of claims 1 to 10.

## Patentansprüche

1. Verfahren zur Verarbeitung eines Schnittbilds für 3D-Druck, umfassend:
Trennen jedes Schnittbilds, um einen Konturbereich und einen in dem Konturbereich definierten Füllbereich zu erhalten, und Aufteilen des Füllbereichs in mehrere Teilbereiche, wobei zwischen benachbarten Teilbereichen in demselben Schnittbild eine Lücke besteht und sich die benachbarten Teilbereiche benachbarter Schnittbilder in einer senkrechten Richtung teilweise überlappen, indem die Teilbereiche der benachbarten Schnittbilder entlang einer vorgegebenen Richtung um einen vorgegebenen Abstand versetzt sind, und
Verwenden des Konturbereichs zusammen mit entweder den Teilbereichen oder den Lücken als Belichtungsbereiche zum Belichten und Aushärten beim 3D-Druck und Verwenden als Nichtbelichtungsbereiche entweder der Teilbereiche oder der Lücken, je nachdem, was als Belichtungsbereiche verwendet wird.

2. Verfahren zur Verarbeitung des Schnittbilds für 3D-Druck nach Anspruch 1, wobei das Aufteilen der Füllbereiche in die mehreren Teilbereiche Folgendes umfasst: Aufteilen der Füllbereiche in die mehreren Teilbereiche, die in geschlossenen Formen sind.

3. Verfahren zur Verarbeitung des Schnittbilds für 3D-Druck nach Anspruch 2, wobei die durch Aufteilen der Füllbereiche erhaltenen mehreren Teilbereiche Folgendes umfassen: vollständige quadratische Teilbereiche, die in den Füllbereichen verteilt sind, und unvollständige quadratische Teilbereiche, die nahe einer Grenze der Füllbereiche verteilt sind.

4. Verfahren zur Verarbeitung des Schnittbilds für 3D-Druck nach Anspruch 2, wobei der Konturbereich eine Grenze der Teilbereiche ist und nicht zusammen mit den Teilbereichen versetzt wird.

5. Verfahren zur Verarbeitung des Schnittbilds für 3D-Druck nach Anspruch 2, wobei das Aufteilen der Füllbereiche in die mehreren Teilbereiche Folgendes umfasst: Aufteilen der Füllbereiche in die mehreren Teilbereiche, die eine gleiche Fläche aufweisen und in geschlossenen Formen sind.

6. Verfahren zur Verarbeitung des Schnittbilds für 3D-Druck nach Anspruch 5, wobei für einen Positionsversatz ein zyklischer Modus festgelegt ist, wobei sich der zyklische Modus darauf bezieht, dass mit zunehmender Dicke einer Druckschicht die Anzahl der Zyklen, die erforderlich sind, damit ein Quadrat in eine ursprüngliche Position zurückkehrt, abnimmt.

7. Verfahren zur Verarbeitung des Schnittbilds für 3D-Druck nach Anspruch 1, ferner umfassend:
Bestimmen eines Abschnitts des Füllbereichs des Schnittbilds, der einen überschüssigen Abschnitt im Vergleich zu mehreren benachbarten Schnittbildern repräsentiert, als ein äußerer Oberflächenbereich eines Modells, wobei der äußere Oberflächenbereich des Modells nicht der Aufteilung in die Teilbereiche unterworfen ist.

8. Verfahren zur Verarbeitung des Schnittbilds für 3D-Druck nach Anspruch 1, ferner umfassend:
Festlegen, dass eine Aushärtungstiefe des Konturbereichs größer oder gleich einer Aushärtungstiefe des Füllbereichs ist.

9. Verfahren zur Verarbeitung des Schnittbilds für 3D-Druck nach Anspruch 1, wobei eine Belichtungsintensität und/oder Belichtungsdauer des Konturbereichs größer ist als die des Füllbereichs, wenn der Füllbereich und der Konturbereich gleichzeitig belichtet werden.

10. Verfahren zur Verarbeitung des Schnittbilds für 3D-Druck nach Anspruch 9, wobei der Füllbereich und der Konturbereich unter Verwendung unterschiedlicher Lichtquellen ausgehärtet werden,
wobei die unterschiedlichen Lichtquellen eine Punktlichtquelle umfassen, die dem Konturbereich entspricht, und eine Flächenlichtquelle, die dem Füllbereich entspricht.

11. Vorrichtung zur Verarbeitung eines Schnittbilds für 3D-Druck, umfassend:
mindestens einen Prozessor und
mindestens einen Speicher, der ausgelegt ist, um mindestens ein Programm zu speichern, wobei
der mindestens eine Prozessor, wenn das mindestens eine Programm von dem mindestens einen Prozessor ausgeführt wird, in die Lage versetzt wird, das Verfahren zur Verarbeitung des Schnittbilds für 3D-Druck nach einem der Ansprüche 1 bis 10 umzusetzen.

12. Speichermedium, das ein von einem Prozessor ausführbares Programm speichert, wobei das von dem Prozessor ausführbare Programm, wenn es von dem Prozessor ausgeführt wird, ausgelegt ist, um das Verfahren zur Verarbeitung des Schnittbilds für 3D-Druck nach einem der Ansprüche 1 bis 10 auszuführen.

13. Verfahren zur Verarbeitung eines Schnittbilds für 3D-Druck, umfassend:
Slicen eines dreidimensionalen Modells, um eine Reihe von Schnittbildern zu generieren;
Auswählen von mindestens zwei aufeinanderfolgenden Schnittbildern aus der Reihe von Schnittbildern und
Verarbeiten jeder der ausgewählten Schnittbilder gemäß dem Verfahren nach einem der Ansprüche 1 bis 10.

## Revendications

1. Procédé de traitement d'une image de tranche pour l'impression 3D comprenant :
la séparation de chaque image de tranche pour obtenir une région de contour, et une région de remplissage qui est définie dans la région de contour, et la segmentation de la région de remplissage en une pluralité de sous-régions, dans lequel il existe un espace entre les sous-régions adjacentes dans la même image de tranche, et les sous-régions adjacentes des images de tranche adjacentes se chevauchent partiellement dans une direction perpendiculaire par décalage, d'une distance prédéfinie, des sous-régions des images de tranche adjacentes à la même position dans la direction perpendiculaire le long d'une direction prédéfinie ; et
l'utilisation de la région de contour soit avec les sous-régions ou avec les espaces en tant que régions d'exposition pour exposition et durcissement en impression 3D, et l'utilisation des autres parmi les sous-régions et les espaces en tant que régions de non-exposition.

2. Procédé de traitement d'image de tranche pour l'impression 3D selon la revendication 1, dans lequel la segmentation des régions de remplissage en une pluralité de sous-régions comprend : la segmentation des régions de remplissage en une pluralité de sous-régions qui présentent des formes fermées.

3. Procédé de traitement d'image de tranche pour l'impression 3D selon la revendication 2, dans lequel la pluralité de sous-régions obtenue par segmentation des régions de remplissage comprend : des sous-régions carrées complètes qui sont réparties dans les régions de remplissage et des sous-régions carrées incomplètes qui sont réparties près d'une bordure des régions de remplissage.

4. Procédé de traitement d'image de tranche pour l'impression 3D selon la revendication 2, dans lequel la région de contour est une bordure des sous-régions, et est dépourvue de décalage avec les sous-régions.

5. Procédé de traitement d'image de tranche pour l'impression 3D selon la revendication 2, dans lequel la segmentation des régions de remplissage en une pluralité de sous-régions comprend : la segmentation des régions de remplissage en une pluralité de sous-régions qui présentent une superficie égale et des formes fermées.

6. Procédé de traitement d'image de tranche pour l'impression 3D selon la revendication 5, dans lequel un décalage de position est défini pour un mode cyclique, dans lequel le mode cyclique désigne celui où au fur et à mesure qu'une épaisseur de couche d'impression augmente, le nombre de fois de cycles requis pour qu'un carré retourne à une position d'origine est réduit.

7. Procédé de traitement d'image de tranche pour l'impression 3D selon la revendication 1, comprenant en outre :
la détermination d'une portion de la région de remplissage de l'image de tranche, qui représente une portion en excès en comparaison avec plusieurs images de tranches adjacentes, en tant que région de surface externe modèle, dans lequel la région de surface externe modèle ne subit pas une segmentation en sous-régions.

8. Procédé de traitement d'image de tranche pour l'impression 3D selon la revendication 1, comprenant en outre :
le réglage d'une profondeur de durcissement de la région de contour de telle sorte qu'elle soit supérieure ou égale à une profondeur de durcissement de la région de remplissage.

9. Procédé de traitement d'image de tranche pour l'impression 3D selon la revendication 1, dans lequel, lorsque la région de remplissage et la région de contour sont exposées en même temps, une intensité d'exposition et/ou une durée d'exposition de la région de contour est/sont supérieure(s) à celle(s) de la région de remplissage.

10. Procédé de traitement d'image de tranche pour l'impression 3D selon la revendication 9, dans lequel la région de remplissage et la région de contour sont durcies à l'aide de sources lumineuses différentes ;
dans lequel les sources lumineuses différentes incluent une source lumineuse ponctuelle correspondant à la région de contour et une source lumineuse surfacique correspondant à la région de remplissage.

11. Appareil de traitement d'une image de tranche pour l'impression 3D, comprenant :
au moins un processeur, et
au moins une mémoire, configurée pour stocker au moins un programme, dans lequel
lorsque l'au moins un programme est exécuté par l'au moins un processeur, l'au moins un processeur est configuré pour mettre en œuvre le procédé de traitement d'image de tranche pour l'impression 3D selon l'une quelconque des revendications 1 à 10.

12. Support de stockage, contenant un programme exécutable par un processeur, dans lequel, lorsqu'il est exécuté par le processeur, le programme exécutable par le processeur est configuré pour exécuter le procédé de traitement d'image de tranche pour l'impression 3D selon l'une quelconque des revendications 1 à 10.

13. Procédé de traitement d'une image de tranche pour l'impression 3D, comprenant :
le découpage en tranches d'un modèle tridimensionnel pour générer une série d'images de tranche ;
la sélection d'au moins deux images de tranche consécutives parmi la série d'images de tranche ; et
le traitement de chacune des images de tranche sélectionnées selon le procédé selon l'une quelconque des revendications 1 à 10.
